# EUROPEAN PATENT SPECIFICATION

(11) **EP 3 169 031 B1**
(45) Date of publication and mention of the grant of the patent: **30.12.2020**
(21) Application number: 14897388.6
(22) Date of filing: 08.07.2014
(51) Int. Cl.: H04L 29/06, H04W 12/04, H04W 12/06, H04W 84/12

(54) **METHOD, DEVICE AND PLATFORM FOR SHARING WIRELESS LOCAL AREA NETWORK**
VERFAHREN, VORRICHTUNG UND SYSTEM ZUR GEMEINSAMEN NUTZUNG VON DRAHTLOSEN LOKALEN NETZWERKEN
PROCÉDÉ, DISPOSITIF ET PLATE-FORME DE PARTAGE DE RÉSEAU LOCAL SANS FIL

(43) Date of publication of application: 17.05.2017
(73) Proprietor: Huawei Technologies Co., Ltd., Longgang District Shenzhen, Guangdong 518129 (CN)
(72) Inventor: CHEN, Xi, Shenzhen Guangdong 518129 (CN)
(74) Representative: Isarpatent
(86) International application number: PCT/CN2014/081834
(87) International publication number: WO 2016/004579

(56) References cited:
- CN-A- 101 958 914
- CN-A- 102 724 668
- CN-A- 103 164 524
- CN-A- 103 298 072
- US-A1- 2010 019 888
- US-A1- 2013 268 277
- US-A1- 2013 276 075
- US-A1- 2014 068 719
- US-B2- 8 285 992

## Description

### TECHNICAL FIELD

The present invention relates to the field of communications technologies, and in particular, to a method, an apparatus, and a platform for sharing a wireless local area network.

### BACKGROUND

US 8 285 992 B2discloses an anonymous access to a wireless local area network. In particular, when a mobile communication device intends to establish a communication with an access point, the access point redirects the request of the mobile communication device to a predetermined URL. The information provided in this URL can be used by the mobile communication device to access the wireless network.

US 20013/276075 A2 discloses a peer-to-peer network setup comprising a wireless processing unit communicating with a master device.

US 2014/068719 A1 relates to security in sharing wireless network configurations. An embodiment comprises reading, by a guest wireless device, data from a machine readable medium, including accessing information, to enable the guest device to obtain credentials from an access rights server, to access an access point or network, based on the accessing information

US 2013/268277 A1 discloses a method for data transfer from one electronic device to another. A sender can upload data to a server using an out-of-band connection while broadcasting an identification signal over one or several mediums, such as acoustic and/or radio.

With rapid development of mobile terminals such as a smartphone and a tablet computer, implementing a data service by using a wireless network has become an important information transmission manner. In the wireless network, a wireless local area network (WLAN) is a network that works at an unlicensed frequency band of 2.4 GHz/5.8 GHz. The wireless local area network bears increasing wireless data traffic because of its advantages such as high mobility, a low cost, and a high construction speed.

Currently, each terminal to which the WLAN is applied can share bandwidth to access an access point (Access Point, AP). To ensure security of each terminal that accesses the WLAN and ensure that bandwidth of the WLAN is not occupied by an unauthorized user, a corresponding password generally needs to be set on the AP in the WLAN. When accessing the WLAN by using the terminal, a user enters the foregoing password on the terminal, so as to ensure that AP authentication succeeds.

As can be seen, currently, when WLAN sharing is performed, each user that requests to share the WLAN needs to be notified of a WLAN service set identifier (Service Set Identifier, SSID) and a WLAN password; each user that requests to share the WLAN enters the foregoing WLAN SSID and WLAN password on the terminal, and after the AP authentication succeeds, the terminal may access the WLAN. For example, for wifi that is commonly applied at home or in an office place, the user needs to learn an SSID of a wireless router corresponding to the wifi. After searching for and finding the WLAN SSID of the wireless router, the terminal may be connected to the wireless router; after a password of the wireless router is entered on the terminal, the terminal can be connected to wireless router, and then connected to the network by using the wireless router. In the foregoing technical solution, all users that share the WLAN need to learn the WLAN SSID and the WLAN password, which causes a problem of low security during the WLAN sharing.

In conclusion, a problem of low system security exists in a process of currently implementing WLAN sharing.

### SUMMARY

Embodiments of the present invention provide ; a method and a system for sharing a wireless local area network, so as to resolve a problem of low system security that exists in a process of currently implementing wireless local area network sharing.

This is achieved by the features of the independent claims. Further advantageous embodiments and improvements of the invention are listed in the dependent claims.

In the embodiments of the present invention, a wireless local area network sharing platform receives a wireless local area network sharing message generated by a first terminal based on locally saved wireless local area network sharing information and generates, according to the sharing information, identifier information corresponding to a wireless local area network sharing page; a second terminal accesses a wireless local area network according to the identifier information. In the technical solutions of the present invention, the second terminal may access the wireless local area network only according to the sharing information included in the wireless local area network sharing page, and a user does not need to learn relevant information such as a user name of the wireless local area network and a password of the wireless local area network, which avoids leakage of the user's information and improves system security.

### BRIEF DESCRIPTION OF DRAWINGS

FIG. 1 is a schematic diagram of an architecture of a wireless local area network system according to an embodiment of the present invention;
FIG. 2 is a first flowchart of a method for sharing a wireless local area network according to an embodiment of the present invention;
FIG. 3 is a second flowchart of a method for sharing a wireless local area network according to an embodiment of the present invention;
FIG. 4 is a third flowchart of a method for sharing a wireless local area network according to an embodiment of the present invention;
FIG. 5 is a signaling interworking diagram during a process of sharing a wireless local area network according to an embodiment of the present invention;
FIG. 6 is a schematic structural diagram of an apparatus for sharing a wireless local area network according to an embodiment of the present invention; and
FIG. 7 is a schematic structural diagram of a wireless local area network sharing platform according to an embodiment of the present invention.

### DESCRIPTION OF EMBODIMENTS

To resolve a problem of low system security that exists in a process of currently sharing a wireless local area network, in the embodiments of the present invention, a wireless local area network sharing platform receives a wireless local area network sharing message generated by a first terminal based on locally saved wireless local area network sharing information and generates, according to the sharing information, identifier information corresponding to a wireless local area network sharing page; a second terminal accesses the wireless local area network according to the identifier information. In the technical solutions of the present invention, the second terminal may access the wireless local area network only according to the sharing information included in the wireless local area network sharing page, and a user does not need to learn relevant information such as a user name of the wireless local area network and a password of the wireless local area network, which avoids leakage of the user's information and improves the system security.

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

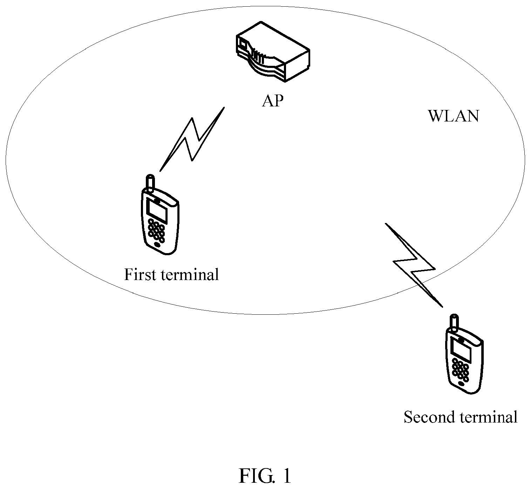

Referring to FIG. 1, FIG. 1 is a schematic diagram of an architecture of a wireless local area network system according to an embodiment of the present invention. The wireless local area network system includes a wireless local area network sharing platform, a first terminal, and a second terminal. The first terminal is a terminal that has already accessed the foregoing wireless local area network. The second terminal is a terminal that requests to share the wireless local area network. The wireless local area network sharing platform may be a server located in a cloud or may be a wireless local area network sharing apparatus located at an AP.

Specifically, the first terminal is configured to generate a wireless local area network sharing message according to locally saved wireless local area network sharing information and send the wireless local area network sharing message to the wireless local area network sharing platform.

The wireless local area network sharing platform is configured to: generate a wireless local area network sharing page according to the wireless local area network sharing information carried in the wireless local area network sharing message sent by the first terminal; generate, according to the wireless local area network sharing page, identifier information corresponding to the foregoing wireless local area network sharing page; and notify the second terminal that requests to share the foregoing wireless local area network of the identifier information corresponding to the foregoing wireless local area network sharing page.

The second terminal is configured to access the wireless local area network sharing page according to the identifier information corresponding to the foregoing wireless local area network sharing page and access the foregoing wireless local area network according to the wireless local area network sharing information included in the wireless local area network sharing page.

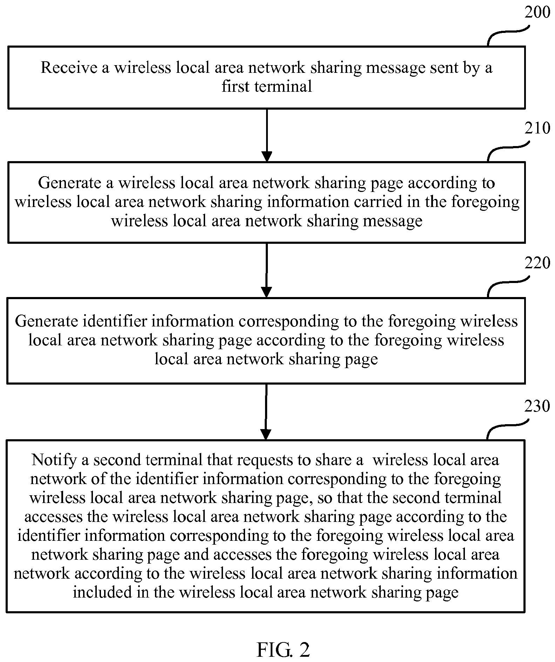

Referring to FIG. 2, FIG. 2 is a first flowchart of a method for sharing a wireless local area network according to an embodiment of the present invention. A process of a method for a second terminal to share the wireless local area network by using a wireless local area network sharing platform in this embodiment of the present invention is as follows:

Step 200: Receive a wireless local area network sharing message sent by a first terminal.

In this embodiment of the present invention, the first terminal generates the wireless local area network sharing message according to locally saved wireless local area network sharing information and sends the wireless local area network sharing message to the wireless local area network sharing platform. The first terminal is a terminal that accesses the wireless local area network. The foregoing wireless local area network sharing information includes a wireless local area network SSID, a user name, and a wireless local area network password. For example, when shared wireless local area network is a home wireless local area network controlled by a wireless router, the wireless local area network sharing information includes at least the wireless local area network SSID (that is, a name corresponding to the wireless router) and the wireless local area network password. When the shared wireless local area network is a wireless local area network such as CMCC, the wireless local area network sharing information includes at least the wireless local area network SSID, the user name obtained by a user from an operator, and the wireless local area network password.

Optionally, the foregoing wireless local area network sharing information further includes a wireless local area network encryption manner, wireless local area network sharing validity information, and the like. The wireless local area network sharing validity information is information that indicates whether the wireless local area network sharing is valid and may include information such as a wireless local area network sharing validity period.

Step 210: Generate a wireless local area network sharing page according to wireless local area network sharing information carried in the foregoing wireless local area network sharing message.

In this embodiment of the present invention, the wireless local area network sharing platform generates, according to the wireless local area network sharing information carried in the wireless local area network sharing message, the wireless local area network sharing page corresponding to the wireless local area network sharing information. The wireless local area network sharing page includes web interface options and wireless local area network sharing information corresponding to each web interface option. Optionally, after generating the foregoing wireless local area network sharing page, the first terminal may access the wireless local area network sharing page by logging in to the wireless local area network sharing platform and set the foregoing web interface options.

Step 220: Generate, according to the foregoing wireless local area network sharing page, identifier information corresponding to the foregoing wireless local area network sharing page.

In this embodiment of the present invention, after the wireless local area network sharing page corresponding to the wireless local area network sharing information is generated, the wireless local area network sharing platform obtains a uniform resource locator (Uniform Resource Locator, URL) corresponding to the wireless local area network sharing page; encodes, according to the URL corresponding to the wireless local area network sharing page, the URL corresponding to the foregoing wireless local area network sharing page by using an encoding technology, and uses encoded information obtained by means of encoding as the identifier information corresponding to the foregoing wireless local area network sharing page. The identifier information corresponding to the foregoing wireless local area network sharing page is information that uniquely identifies the foregoing wireless local area network sharing page. The identifier information includes the foregoing URL, that is, the second terminal may obtain the URL by reading the identifier information, log in to the wireless local area network sharing platform according to the URL, and access the wireless local area network sharing page.

Optionally, the identifier information corresponding to the foregoing wireless local area network sharing page may be quick response code information, sound wave information, barcode information, near field communication technology (Near Field Communication, NFC) information, or infrared radiation (Infrared Radiation, IR) information.

Step 230: Notify a second terminal that requests to share the foregoing wireless local area network of the identifier information corresponding to the foregoing wireless local area network sharing page, so that the second terminal accesses the wireless local area network sharing page according to the identifier information corresponding to the foregoing wireless local area network sharing page and accesses the foregoing wireless local area network according to the wireless local area network sharing information included in the wireless local area network sharing page.

In this embodiment of the present invention, the wireless local area network sharing platform sends the identifier information corresponding to the foregoing wireless local area network sharing page to the first terminal. The second terminal that requests to share the foregoing wireless local area network obtains, from the first terminal, the identifier information corresponding to the foregoing wireless local area network sharing page. A manner in which the second terminal obtains, from the first terminal, the identifier information corresponding to the foregoing wireless local area network sharing page varies with a form of the identifier information. The second terminal may obtain the identifier information in a manner of sending the identifier information to the second terminal by the first terminal, or the second terminal may obtain the identifier information in a manner of reading the identifier information from the first terminal by the second terminal. For example, when the wireless local area network sharing platform sends the identifier information corresponding to the foregoing wireless local area network sharing page to the first terminal and the identifier information is the quick response information, the first terminal saves the quick response information corresponding to the foregoing wireless local area network sharing page. If requesting to share the foregoing wireless local area network, the second terminal reads the identifier information corresponding to the foregoing wireless local area network sharing page in a manner of scanning the quick response information that is corresponding to the foregoing wireless local area network sharing page and that is saved by the first terminal. When the identifier information is the sound wave information, the first terminal saves the sound wave information corresponding to the foregoing wireless local area network sharing page. If requesting to share the foregoing wireless local area network, the second terminal reads the identifier information corresponding to the foregoing wireless local area network sharing page in a manner of identifying the sound wave information played at the first terminal.

Optionally, when receiving a wireless local area network sharing invalidity indication entered by a user, the first terminal may generate a wireless local area network sharing invalidity setting message according to the wireless local area network sharing invalidity indication, and send the wireless local area network sharing invalidity setting message to the wireless local area network sharing platform. The wireless local area network sharing platform sets, according to a wireless local area network SSID and a user name that are carried in the wireless local area network sharing invalidity setting message, the wireless local area network sharing validity information corresponding to the first terminal to invalid wireless local area network sharing; or the user logs in to the wireless local area network sharing platform by using the first terminal, accesses the foregoing wireless local area network sharing page, and sets, on the wireless local area network sharing page, the wireless local area network sharing validity information corresponding to the first terminal to invalid wireless local area network sharing.

Further, in the foregoing process, the second terminal sends a wireless local area network sharing page access request to the wireless local area network sharing platform by using the identifier information. In this case, the wireless local area network sharing platform needs to detect, according to the wireless local area network sharing validity information included in the wireless local area network sharing page, whether corresponding wireless local area network sharing is valid. When determining that the wireless local area network sharing validity information included in the wireless local area network sharing page is valid wireless local area network sharing, the wireless local area network sharing platform returns the wireless local area network sharing page to the second terminal, and the second terminal presents the wireless local area network sharing page on a local interface. On the wireless local area network sharing page, the wireless local area network sharing information is in encrypted state. When determining that the wireless local area network sharing validity information included in the wireless local area network sharing page is invalid wireless local area network sharing, the wireless local area network sharing platform sends a wireless local area network sharing failure message to the second terminal. The wireless local area network sharing platform performs encryption on the wireless local area network sharing information in the wireless local area network sharing page by using a data encryption standard (Data Encryption Standard, DES) algorithm, an international data encryption (International Data Encryption Algorithm, IDEA) algorithm, an advanced encryption standard (Advanced Encryption Standard, AES) algorithm, or the like.

Optionally, when the wireless local area network sharing validity information included in the foregoing wireless local area network sharing page is valid wireless local area network sharing, after obtaining the wireless local area network sharing page and parsing, by using a preset decryption algorithm, the encrypted wireless local area network sharing information on the wireless local area network sharing page, the second terminal obtains the wireless local area network sharing information included in the wireless local area network sharing page and accesses, by using the wireless local area network sharing information, the wireless local area network corresponding to the first terminal.

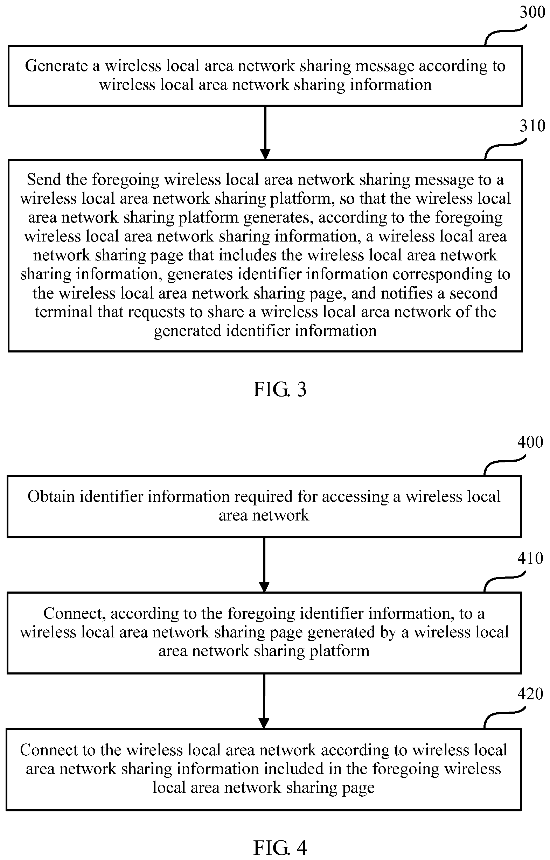

Referring to FIG. 3, FIG. 3 is a second flowchart of a method for sharing a wireless local area network according to an embodiment of the present invention. A process of a method for a second terminal to share the wireless local area network by using a first terminal in this embodiment of the present invention is as follows:

Step 300: Generate a wireless local area network sharing message according to wireless local area network sharing information.

In this embodiment of the present invention, the first terminal generates the wireless local area network sharing message according to the locally saved wireless local area network sharing information. The first terminal is a terminal that accesses the wireless local area network. The foregoing wireless local area network sharing information includes a wireless local area network SSID, a user name, and a wireless local area network password; optionally, the foregoing wireless local area network sharing information further includes a wireless local area network encryption manner, wireless local area network sharing validity information, and the like.

Step 310: Send the foregoing wireless local area network sharing message to a wireless local area network sharing platform, so that the wireless local area network sharing platform generates, according to the foregoing wireless local area network sharing information, a wireless local area network sharing page that includes the wireless local area network sharing information, generates identifier information corresponding to the wireless local area network sharing page, and notifies a second terminal that requests to share a wireless local area network of the generated identifier information.

In this embodiment of the present invention, the first terminal receives the identifier information that is corresponding to the wireless local area network sharing page and that is generated by the foregoing wireless local area network sharing platform based on the wireless local area network sharing information, and sends the identifier information to the second terminal that requests to share the wireless local area network. The second terminal accesses, according to the foregoing identifier information, the wireless local area network sharing page corresponding to the identifier information, and accesses the wireless local area network according to the wireless local area network sharing information included in the wireless local area network sharing page.

Optionally, when receiving a wireless local area network sharing invalidity indication entered by a user, the first terminal may generate a wireless local area network sharing invalidity setting message according to the wireless local area network sharing invalidity indication, and send the wireless local area network sharing invalidity setting message to the wireless local area network sharing platform. The wireless local area network sharing platform sets, according to a wireless local area network SSID and a user name that are carried in the wireless local area network sharing invalidity setting message, the wireless local area network sharing validity information included in the wireless local area network sharing page corresponding to the first terminal to invalid wireless local area network sharing; or the user logs in to the wireless local area network sharing platform by using the first terminal, accesses the foregoing wireless local area network sharing page, and sets, on the wireless local area network sharing page, the wireless local area network sharing validity information corresponding to the first terminal to invalid wireless local area network sharing.

Referring to FIG. 4, FIG. 4 is a third flowchart of a method for sharing a local area network according to an embodiment of the present invention. A process of a method for a second terminal to share the wireless local area network in this embodiment of the present invention is as follows:

Step 400: Obtain identifier information required for accessing a wireless local area network.

In this embodiment of the present invention, the second terminal obtains the identifier information that is locally saved by a first terminal that has already accessed the foregoing wireless local area network. The identifier information is used to uniquely identify a wireless local area network sharing page.

Step 410: Connect, according to the foregoing identifier information, to a wireless local area network sharing page generated by a wireless local area network sharing platform.

In this embodiment of the present invention, the second terminal logs in to the wireless local area network sharing platform according to the foregoing identifier information. When the wireless local area network sharing platform detects that the wireless local area network sharing is valid, the second terminal accesses the wireless local area network sharing page corresponding to the identifier information.

Step 420: Connect to the wireless local area network according to wireless local area network sharing information included in the foregoing wireless local area network sharing page.

In this embodiment of the present invention, after accessing the wireless local area network sharing page by running a local browser application program, the second terminal obtains the encrypted wireless local area network sharing information included in the wireless local area network sharing page. The second terminal parses the encrypted wireless local area network sharing information in a wireless local area network encryption manner and that is connected to the wireless local area network by running a web app included in the browser according to the parsed wireless local area network sharing information. The wireless local area network encryption manner is delivered by the wireless local area network sharing platform. An application program included in the web app is the same as a configuration program that controls a wireless network connection module in the second terminal.

In the foregoing technical solutions, a second terminal obtains encrypted wireless local area network sharing information by accessing a wireless local area network sharing page and accesses a wireless local area network according to the encrypted wireless local area network sharing information. It is implemented that the second terminal shares the wireless local area network corresponding to a first terminal, and the user does not need to enter relevant information of the wireless local area network at the second terminal, which avoids a problem of information leakage and effectively improves system security.

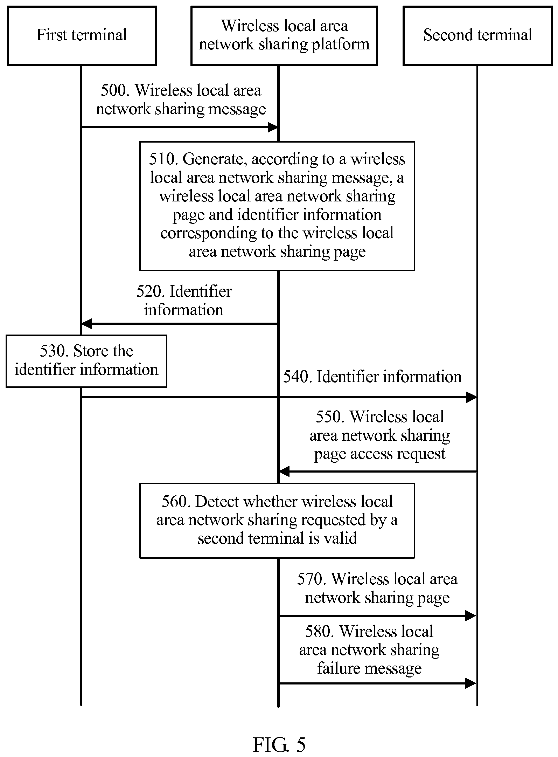

Based on the foregoing technical solutions, referring to FIG. 5, FIG. 5 is a signaling interworking diagram in a process of sharing a local area network according to an embodiment of the present invention. A process of signaling interworking between communications devices in a process of sharing the wireless local area network in this embodiment of the present invention is as follows:
Step 500: A first terminal sends a wireless local area network sharing message to a wireless local area network sharing platform.
   In this embodiment of the present invention, the foregoing wireless local area network sharing message includes at least a wireless local area network SSID, a user name, and a wireless local area network password.
Step 510: The wireless local area network sharing platform generates a wireless local area network sharing page according to the wireless local area network sharing message, and generates identifier information corresponding to the wireless local area network sharing page.
Step 520: The wireless local area network sharing platform sends the identifier information corresponding to the foregoing wireless local area network sharing page to the first terminal.
Step 530: The first terminal locally saves the identifier information corresponding to the foregoing wireless local area network sharing page.
Step 540: A second terminal obtains, from the first terminal, the identifier information corresponding to the foregoing wireless local area network sharing page.
Step 550: The second terminal sends a wireless local area network sharing page access request to the wireless local area network sharing platform.
Step 560: The wireless local area network sharing platform detects whether wireless local area network sharing requested by the foregoing second terminal is valid.
Step 570: When the wireless local area network sharing requested by the second terminal is valid, the wireless local area network sharing platform returns the wireless local area network sharing page to the second terminal.
Step 580: When the wireless local area network sharing requested by the second terminal is invalid, the wireless local area network sharing platform returns a wireless local area network sharing failure message to the second terminal.

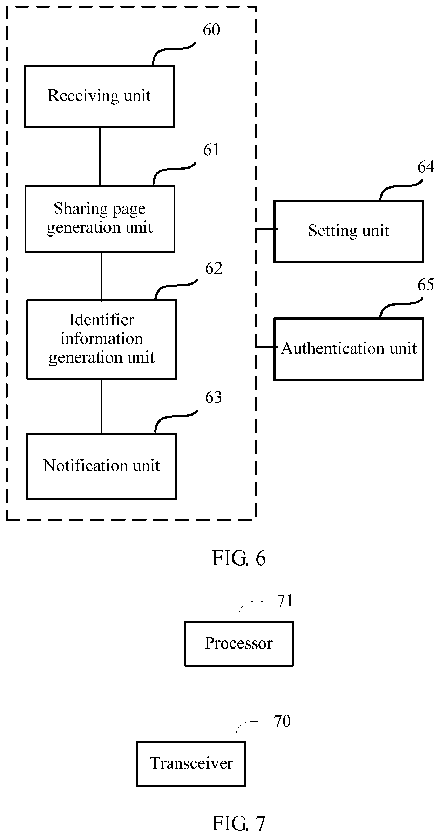

Based on the foregoing technical solutions, referring to FIG. 6, FIG. 6 is a schematic structural diagram of an apparatus for sharing a wireless local area network according to an embodiment of the present invention. In this embodiment of the present invention, the apparatus for sharing the wireless local area network includes a receiving unit 60, a sharing page generation unit 61, an identifier information generation unit 62, and a notification unit 63, where:
the receiving unit 60 is configured to receive a wireless local area network sharing message sent by a first terminal, and send the wireless local area network sharing message to the sharing page generation unit 61, where the wireless local area network sharing message carries wireless local area network sharing information;
the sharing page generation unit 61 is configured to receive the wireless local area network sharing message sent by the receiving unit 60, generate a wireless local area network sharing page according to the wireless local area network sharing information carried in the wireless local area network sharing message, and send the wireless local area network sharing page to the identifier information generation unit 62, where the wireless local area network sharing page includes the wireless local area network sharing information;
the identifier information generation unit 62 is configured to receive the wireless local area network sharing page generated by the sharing page generation unit 61, generate identifier information corresponding to the wireless local area network sharing page, and send the identifier information corresponding to the wireless local area network sharing page to the notification unit 63, where the identifier information is used to uniquely identify the wireless local area network sharing page; and
the notification unit 63 is configured to receive the identifier information that is corresponding to the wireless local area network sharing page and that is generated by the identifier information generation unit 62 and notify the identifier information corresponding to the wireless local area network sharing page to a second terminal that requests to share the wireless local area network, so that the second terminal accesses the wireless local area network sharing page according to the identifier information and accesses the wireless local area network according to the wireless local area network sharing information included in the wireless local area network sharing page.

Optionally, the identifier information generation unit 62 is specifically configured to: obtain a uniform resource locator corresponding to the wireless local area network sharing page; and use encoded information obtained by encoding the uniform resource locator as the identifier information corresponding to the wireless local area network sharing page.

Optionally, the sharing page generation unit 61 is specifically configured to generate the wireless local area network sharing page according to a wireless local area network service set identifier, and a user name and a password for accessing the wireless local area network, where the wireless local area network service set identifier, and the user name and the password for accessing the wireless local area network are included in the wireless local area network sharing information.

Further, the apparatus further includes a setting unit 64, configured to: if the wireless local area network sharing information includes wireless local area network sharing validity information, after the wireless local area network sharing page is generated, when receiving a wireless local area network sharing invalidity setting message sent by the first terminal, set the wireless local area network sharing validity information included in the wireless local area network sharing page to invalid wireless local area network sharing.

Further, the apparatus includes an authentication unit 65, configured to: when it is detected that the second terminal accesses the wireless local area network sharing page according to the identifier information, obtain the wireless local area network sharing validity information included in the wireless local area network sharing page; and when determining that the obtained wireless local area network sharing validity information is valid wireless local area network sharing, return the wireless local area network sharing page to the second terminal.

Based on the foregoing technical solutions, referring to FIG. 7, FIG. 7 is a schematic structural diagram of a wireless local area network sharing platform according to an embodiment of the present invention. The wireless local area network sharing platform provided in this embodiment of the present invention includes a transceiver 70 and a processor 71, where:
the transceiver 70 is configured to receive a wireless local area network sharing message sent by a first terminal, and send the wireless local area network sharing message to the processor 71;
the processor 71 is configured to receive the wireless local area network sharing message sent by the transceiver 70 and generate a wireless local area network sharing page according to wireless local area network sharing information carried in the wireless local area network sharing message, where the wireless local area network sharing page includes the wireless local area network sharing information;
the processor 71 is further configured to generate identifier information corresponding to the wireless local area network sharing page and send the identifier information corresponding to the wireless local area network sharing page to the transceiver 70, where the identifier information is used to uniquely identify the wireless local area network sharing page; and
the transceiver 70 is further configured to notify, to a second terminal that requests to share the wireless local area network, the identifier information that is corresponding to the wireless local area network sharing page and that is sent by the processor 71, so that the second terminal accesses the wireless local area network sharing page according to the identifier information and accesses the wireless local area network according to the wireless local area network sharing information included in the wireless local area network sharing page.

Optionally, the processor 71 is configured to: obtain a uniform resource locator corresponding to the wireless local area network sharing page; and use encoded information obtained by encoding the uniform resource locator as the identifier information corresponding to the wireless local area network sharing page.

Optionally, the processor 71 is configured to generate the wireless local area network sharing page according to a wireless local area network service set identifier, and a user name and a password for accessing the wireless local area network, where the wireless local area network service set identifier, and the user name and the password for accessing the wireless local area network are included in the wireless local area network sharing information.

Optionally, the processor 71 is further configured to generate the wireless local area network sharing page according to wireless local area network sharing validity information included in the wireless local area network sharing information.

Optionally, the transceiver 70 is further configured to receive a wireless local area network sharing invalidity setting message sent by the first terminal, and send the wireless local area network sharing invalidity setting message to the processor 71.

Optionally, the processor 71 is further configured to: after the wireless local area network sharing page is generated, when receiving the wireless local area network sharing invalidity setting message sent by the transceiver, set, according to the wireless local area network sharing invalidity setting message, the wireless local area network sharing validity information included in the wireless local area network sharing page to invalid wireless local area network sharing.

Further, the transceiver 70 is further configured to receive a message that the second terminal requests to access the wireless local area network sharing page according to the identifier information and send the message of requesting to access the wireless local area network sharing page to the processor 71.

Further, the processor 71 is further configured to: receive the message that is used to request to access the wireless local area network sharing page and that is sent by the transceiver 70; when determining, according to the message of requesting to access the wireless local area network sharing page, that the second terminal accesses the wireless local area network sharing page, obtain the wireless local area network sharing validity information included in the wireless local area network sharing page; and when determining that the obtained wireless local area network sharing validity information is valid wireless local area network sharing, instruct the transceiver 70 to return the wireless local area network sharing page to the second terminal.

Optionally, the transceiver 70 is further configured to return the wireless local area network sharing page to the second terminal.

In conclusion, in the embodiments of the present invention, a first terminal sends a wireless local area network sharing message to a wireless local area network sharing platform. The wireless local area network sharing platform generates a wireless local area network sharing page according to wireless local area network sharing information and generates identifier information corresponding to the wireless local area network sharing page. The wireless local area network sharing platform notifies a second terminal that requests to share the foregoing wireless local area network of the identifier information corresponding to the foregoing wireless local area network sharing page, so that the second terminal accesses the wireless local area network sharing page according to the identifier information corresponding to the foregoing wireless local area network sharing page and accesses the foregoing wireless local area network according to the wireless local area network sharing information included in the wireless local area network sharing page. In the technical solutions of the present invention, the second terminal may access the wireless local area network only according to the sharing information included in the wireless local area network sharing page, and a user does not need to learn relevant information such as a user name of the wireless local area network and a password of the wireless local area network, which avoids leakage of the user's information and improves system security.

A person skilled in the art should understand that the embodiments of the present invention may be provided as a method, a system, or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a disk memory, a CD-ROM, an optical memory, and the like) that include computer-usable program code.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may also be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some preferred embodiments of the present invention have been described, persons skilled in the art can make changes and modifications to these embodiments once they learn the basic inventive concept. Therefore, the following claims are intended to be construed as to cover the exemplary embodiments and all changes and modifications falling within the scope of the present invention.

Obviously, a person skilled in the art can make various modifications and variations to the embodiments of the present invention without departing from the scope of the embodiments of the present invention. The present invention is intended to cover these modifications and variations provided that they fall within the scope of protection defined by the following claims

## Claims

1. A method for sharing a wireless local area network, comprising:
receiving, by a wireless local area network sharing platform, a wireless local area network sharing message sent by a first terminal, wherein the wireless local area network sharing message carries wireless local area network sharing information, the wireless local area network sharing information including at least a wireless local area network SSID and a wireless local area network password, and wherein the first terminal has already accessed the wireless local area network;
generating, by the wireless local area network sharing platform, a wireless local area network sharing page according to the wireless local area network sharing information carried in the wireless local area network sharing message, wherein the wireless local area network sharing page comprises the wireless local area network sharing information;
generating, by the wireless local area network sharing platform, identifier information corresponding to the wireless local area network sharing page, wherein the identifier information is used to uniquely identify the wireless local area network sharing page, and wherein the identifier information corresponding to the wireless local area network sharing page is provided by sound waves; and
notifying, by the wireless local area network sharing platform, the identifier information corresponding to the wireless local area network sharing page to the first terminal for a second terminal that requests to share the wireless local area network to obtain the identifier information from the first terminal, so that the second terminal accesses the wireless local area network sharing page according to the identifier information played at the first terminal and accesses the wireless local area network according to the wireless local area network sharing information comprised in the wireless local area network sharing page,
wherein the method comprises saving, by the first terminal, the sound wave information corresponding to the wireless local area network sharing page, and reading, by the second terminal, the identifier information corresponding to the wireless local area network sharing page in a manner of identifying the sound wave information played at the first terminal, if requesting to share the wireless local area network.

2. The method according to claim 1, wherein the generating identifier information corresponding to the wireless local area network sharing page specifically comprises:
obtaining a uniform resource locator corresponding to the wireless local area network sharing page; and
using encoded information obtained by encoding the uniform resource locator as the identifier information corresponding to the wireless local area network sharing page.

3. The method according to claim 1 or 2, wherein the wireless local area network sharing information comprises a wireless local area network service set identifier, and a user name and a password for accessing the wireless local area network.

4. The method according to claim 3, wherein the wireless local area network sharing information further comprises wireless local area network sharing validity information; and
after the wireless local area network sharing page is generated, the method further comprises:
when receiving a wireless local area network sharing invalidity setting message sent by the first terminal, setting the wireless local area network sharing validity information comprised in the wireless local area network sharing page to invalid wireless local area network sharing.

5. The method according to claim 4, wherein when it is detected that the second terminal accesses the wireless local area network sharing page according to the identifier information, the method further comprises:
obtaining the wireless local area network sharing validity information comprised in the wireless local area network sharing page; and
when determining that the obtained wireless local area network sharing validity information is valid wireless local area network sharing, returning the wireless local area network sharing page to the second terminal.

6. A system including a wireless local area network sharing platform, a first terminal and a second terminal, the wireless local area network sharing platform comprising:
a transceiver, configured to receive a wireless local area network sharing message sent by a first terminal, and send the wireless local area network sharing message to a processor, wherein the first terminal has already accessed the wireless local area network; and
the processor, configured to receive the wireless local area network sharing message sent by the transceiver and generate a wireless local area network sharing page according to wireless local area network sharing information carried in the wireless local area network sharing message, the wireless local area network sharing information including at least a wireless local area network SSID and a wireless local area network password, wherein the wireless local area network sharing page comprises the wireless local area network sharing information; wherein:
the processor is further configured to generate identifier information corresponding to the wireless local area network sharing page and send the identifier information corresponding to the wireless local area network sharing page to the transceiver, wherein the identifier information is used to uniquely identify the wireless local area network sharing page, and wherein the identifier information corresponding to the wireless local area network sharing page is provided by sound waves; and
the transceiver is further configured to notify, to the first terminal for a second terminal that requests to share a wireless local area network, the identifier information that is corresponding to the wireless local area network sharing page and that is sent by the processor to obtain the identifier information from the first terminal, so that the second terminal accesses the wireless local area network sharing page according to the identifier information played at the first terminal and accesses the wireless local area network according to the wireless local area network sharing information comprised in the wireless local area network sharing page,
wherein the first terminal saves the sound wave information corresponding to the wireless local area network sharing page, and
the second terminal reads the identifier information corresponding to the wireless local area network sharing page in a manner of identifying the sound wave information played at the first terminal, if requesting to share the wireless local area network.

7. The system according to claim 6, wherein the processor is configured to:
obtain a uniform resource locator corresponding to the wireless local area network sharing page and use encoded information obtained by encoding the uniform resource locator as the identifier information corresponding to the wireless local area network sharing page.

8. The system according to claim 6 or 7, wherein the processor is configured to:
generate the wireless local area network sharing page according to a wireless local area network service set identifier, and a user name and a password for accessing the wireless local area network, wherein the wireless local area network service set identifier, and the user name and the password for accessing the wireless local area network are comprised in the wireless local area network sharing information.

9. The system according to claim 8, wherein the processor is further configured to:
generate the wireless local area network sharing page according to wireless local area network sharing validity information comprised in the wireless local area network sharing information.

10. The system according to claim 9, wherein the transceiver is further configured to:
receive a wireless local area network sharing invalidity setting message sent by the first terminal, and send the wireless local area network sharing invalidity setting message to the processor.

## Patentansprüche

1. Verfahren zur gemeinsamen Nutzung eines drahtlosen lokalen Netzwerks, Folgendes umfassend:
Empfangen, durch eine Plattform zur gemeinsamen Nutzung eines drahtlosen lokalen Netzwerks, einer von einem ersten Endgerät gesendeten Nachricht zur gemeinsamen Nutzung eines drahtlosen lokalen Netzwerks,
wobei die Nachricht zur gemeinsamen Nutzung eines drahtlosen lokalen Netzwerks Informationen zur gemeinsamen Nutzung eines drahtlosen lokalen Netzwerks transportiert und die Informationen zur gemeinsamen Nutzung eines drahtlosen lokalen Netzwerks mindestens eine SSID des drahtlosen lokalen Netzwerks und ein Passwort des drahtlosen lokalen Netzwerks enthalten, und
wobei das erste Endgerät bereits auf das drahtlose lokale Netzwerk zugegriffen hat; Erzeugen, durch die Plattform zur gemeinsamen Nutzung eines drahtlosen lokalen Netzwerks, einer Seite zur gemeinsamen Nutzung eines drahtlosen lokalen Netzwerks gemäß den Informationen zur gemeinsamen Nutzung eines drahtlosen lokalen Netzwerks, die in der Nachricht zur gemeinsamen Nutzung eines drahtlosen lokalen Netzwerks transportiert werden,
wobei die Seite zur gemeinsamen Nutzung eines drahtlosen lokalen Netzwerks die Informationen zur gemeinsamen Nutzung eines drahtlosen lokalen Netzwerks umfasst;
Erzeugen, durch die Plattform zur gemeinsamen Nutzung eines drahtlosen lokalen Netzwerks, von Bezeichnerinformationen, die der Seite zur gemeinsamen Nutzung eines drahtlosen lokalen Netzwerks entsprechen,
wobei die Bezeichnerinformationen verwendet werden, um die Seite zur gemeinsamen Nutzung eines drahtlosen lokalen Netzwerks eindeutig zu identifizieren, und
wobei die Bezeichnerinformationen, die der Seite zur gemeinsamen Nutzung eines drahtlosen lokalen Netzwerks entsprechen, durch Schallwellen bereitgestellt werden; und
Melden, durch die Plattform zur gemeinsamen Nutzung des drahtlosen lokalen Netzwerks, der Bezeichnerinformationen, die der Seite zur gemeinsamen Nutzung des drahtlosen lokalen Netzwerks entsprechen, an das erste Endgerät für ein zweites Endgerät, das eine Anfrage zur gemeinsamen Nutzung des drahtlosen lokalen Netzwerks stellt, um die Bezeichnerinformationen von dem ersten Endgerät zu erhalten, so dass das zweite Endgerät gemäß den Bezeichnerinformationen, die an dem ersten Endgerät wiedergegeben werden, auf die Seite zur gemeinsamen Nutzung des drahtlosen lokalen Netzwerks zugreift, und gemäß den Informationen zur gemeinsamen Nutzung des drahtlosen lokalen Netzwerks, die in der Seite zur gemeinsamen Nutzung des drahtlosen lokalen Netzwerks enthalten sind, auf das drahtlose lokale Netzwerk zugreift,
wobei das Verfahren Folgendes umfasst: Sichern, durch das erste Endgerät, der Schallwelleninformationen, die der Seite zur gemeinsamen Nutzung des drahtlosen lokalen Netzwerks entsprechen, und Lesen, durch das zweite Endgerät, der Bezeichnerinformationen, die der Seite zur gemeinsamen Nutzung des drahtlosen lokalen Netzwerks entsprechen, in einer Weise des Identifizierens der an dem ersten Endgerät wiedergegebenen Schallwelleninformationen, falls eine Anfrage zur gemeinsamen Nutzung des drahtlosen lokalen Netzwerks gestellt wird.

2. Verfahren gemäß Anspruch 1,
wobei das Erzeugen der Bezeichnerinformationen, die der Seite zur gemeinsamen Nutzung des drahtlosen lokalen Netzwerks entsprechen, speziell Folgendes umfasst:
Erhalten eines Uniform Resource Locator (Internetadresse), welcher der Seite zur gemeinsamen Nutzung des drahtlosen lokalen Netzwerks entspricht; und
Verwenden von codierten Informationen, die durch Codieren des Uniform Resource Locator als die Bezeichnerinformationen, die der Seite zur gemeinsamen Nutzung des drahtlosen lokalen Netzwerks entsprechen, erhalten werden.

3. Verfahren gemäß Anspruch 1 oder 2,
wobei die Informationen zur gemeinsamen Nutzung des drahtlosen lokalen Netzwerks einen Service Set Identifier (SSID) des drahtlosen lokalen Netzwerks, und einen Benutzernamen und ein Passwort zum Zugreifen auf das drahtlose lokale Netzwerk umfassen.

4. Verfahren gemäß Anspruch 3,
wobei die Informationen zur gemeinsamen Nutzung des drahtlosen lokalen Netzwerks ferner Gültigkeitsinformationen zur gemeinsamen Nutzung des drahtlosen lokalen Netzwerks umfassen; und
nachdem die Seite zur gemeinsamen Nutzung des drahtlosen lokalen Netzwerks erzeugt worden ist, das Verfahren ferner Folgendes umfasst:
wenn eine Nachricht der Ungültigkeitsmachung der gemeinsamen Nutzung des drahtlosen lokalen Netzwerks durch das erste Endgerät gesendet wird, Einstellen der Gültigkeitsinformationen zur gemeinsamen Nutzung des drahtlosen lokalen Netzwerks, die in der Seite zur gemeinsamen Nutzung des drahtlosen lokalen Netzwerks enthalten sind, auf ungültige gemeinsame Nutzung des drahtlosen lokalen Netzwerks.

5. Verfahren gemäß Anspruch 4,
wobei, wenn erkannt wird, dass das zweite Endgerät gemäß den Bezeichnerinformationen auf die Seite zur gemeinsamen Nutzung des drahtlosen lokalen Netzwerks zugreift, das Verfahren ferner Folgendes umfasst:
Erhalten der Gültigkeitsinformationen zur gemeinsamen Nutzung des drahtlosen lokalen Netzwerks, die in der Seite zur gemeinsamen Nutzung des drahtlosen lokalen Netzwerks enthalten sind; und
wenn bestimmt wird, dass die erhaltenen Gültigkeitsinformationen zur gemeinsamen Nutzung des drahtlosen lokalen Netzwerks eine gültige gemeinsame Nutzung des drahtlosen lokalen Netzwerks beinhalten, Zurückgeben der Seite zur gemeinsamen Nutzung des drahtlosen lokalen Netzwerks an das zweite Endgerät.

6. System, das eine Plattform zur gemeinsamen Nutzung des drahtlosen lokalen Netzwerks, ein erstes Endgerät und ein zweites Endgerät aufweist, wobei die Plattform zur gemeinsamen Nutzung des drahtlosen lokalen Netzwerks Folgendes umfasst:
einen Transceiver, der dazu ausgelegt ist, eine von einem ersten Endgerät gesendete Nachricht zur gemeinsamen Nutzung des drahtlosen lokalen Netzwerks zu empfangen und die Nachricht zur gemeinsamen Nutzung des drahtlosen lokalen Netzwerks zu einem Prozessor zu senden,
wobei das erste Endgerät bereits auf das drahtlose lokale Netzwerk zugegriffen hat; und
der Prozessor, der dazu ausgelegt ist, die von dem Transceiver gesendete Nachricht zur gemeinsamen Nutzung des drahtlosen lokalen Netzwerks zu empfangen und eine Seite zur gemeinsamen Nutzung des drahtlosen lokalen Netzwerks zu erzeugen, gemäß den Informationen zur gemeinsamen Nutzung des drahtlosen lokalen Netzwerks, transportiert in der Nachricht zur gemeinsamen Nutzung des drahtlosen lokalen Netzwerks, wobei die Informationen zur gemeinsamen Nutzung des drahtlosen lokalen Netzwerks mindestens eine SSID des drahtlosen lokalen Netzwerks und ein Passwort des drahtlosen lokalen Netzwerks enthalten,
wobei die Seite zur gemeinsamen Nutzung des drahtlosen lokalen Netzwerks die Informationen zur gemeinsamen Nutzung des drahtlosen lokalen Netzwerks umfasst;
wobei
der Prozessor ferner dazu ausgelegt ist, der Seite zur gemeinsamen Nutzung des drahtlosen lokalen Netzwerks entsprechende Bezeichnerinformationen zu erzeugen und die der Seite zur gemeinsamen Nutzung des drahtlosen lokalen Netzwerks entsprechenden Bezeichnerinformationen zu dem Transceiver zu senden,
wobei die Bezeichnerinformationen verwendet werden, um die Seite zur gemeinsamen Nutzung des drahtlosen lokalen Netzwerks eindeutig zu identifizieren, und
wobei die Bezeichnerinformationen, die der Seite zur gemeinsamen Nutzung des drahtlosen lokalen Netzwerks entsprechen, durch Schallwellen bereitgestellt werden; und
der Transceiver ferner dazu ausgelegt ist, dem ersten Endgerät für ein zweites Endgerät, das eine Anfrage zur gemeinsamen Nutzung des drahtlosen lokalen Netzwerks stellt, die Bezeichnerinformationen zu melden, die der Seite zur gemeinsamen Nutzung des drahtlosen lokalen Netzwerks entsprechen, und die durch den Prozessor gesendet werden, um die Bezeichnerinformationen von dem ersten Endgerät zu erhalten, so dass das zweite Endgerät gemäß den an dem ersten Endgerät wiedergegebenen Bezeichnerinformationen auf die Seite zur gemeinsamen Nutzung des drahtlosen lokalen Netzwerks zugreift, und gemäß den Informationen zur gemeinsamen Nutzung des drahtlosen lokalen Netzwerks, die in der Seite zur gemeinsamen Nutzung des drahtlosen lokalen Netzwerks enthalten sind, auf das drahtlose lokale Netzwerk zugreift,
wobei das erste Endgerät die der Seite zur gemeinsamen Nutzung des drahtlosen lokalen Netzwerks entsprechenden Schallwelleninformationen sichert, und
das zweite Endgerät die der Seite zur gemeinsamen Nutzung des drahtlosen lokalen Netzwerks entsprechenden Bezeichnerinformationen liest, in einer Weise des Identifizierens der an dem ersten Endgerät wiedergegebenen Schallwelleninformationen, falls eine Anfrage zur gemeinsamen Nutzung des drahtlosen lokalen Netzwerks gestellt wird.

7. System gemäß Anspruch 6,
wobei der Prozessor für Folgendes ausgelegt ist:
Erhalten eines Uniform Resource Locator (Internetadresse), welcher der Seite zur gemeinsamen Nutzung des drahtlosen lokalen Netzwerks entspricht, und Verwenden von codierten Informationen, die durch Codieren des Uniform Resource Locator als die Bezeichnerinformationen, die der Seite zur gemeinsamen Nutzung des drahtlosen lokalen Netzwerks entsprechen, erhalten werden.

8. System gemäß Anspruch 6 oder 7,
wobei der Prozessor für Folgendes ausgelegt ist:
Erzeugen der Seite zur gemeinsamen Nutzung des drahtlosen lokalen Netzwerks gemäß einem Service Set Identifier (SSID) des drahtlosen lokalen Netzwerks, eines Benutzernamens und eines Passworts zum Zugreifen auf das drahtlose lokale Netzwerk,
wobei der Service Set Identifier (SSID) des drahtlosen lokalen Netzwerks, und der Benutzername und das Passwort zum Zugreifen auf das drahtlose lokale Netzwerk in den Informationen zur gemeinsamen Nutzung des drahtlosen lokalen Netzwerks enthalten sind.

9. System gemäß Anspruch 8,
wobei der Prozessor ferner für Folgendes ausgelegt ist:
Erzeugen der Seite zur gemeinsamen Nutzung des drahtlosen lokalen Netzwerks gemäß den Gültigkeitsinformationen zur gemeinsamen Nutzung des drahtlosen lokalen Netzwerks, die in den Informationen zur gemeinsamen Nutzung des drahtlosen lokalen Netzwerks enthalten sind.

10. System gemäß Anspruch 9,
wobei der Transceiver ferner für Folgendes ausgelegt ist:
Empfangen der von dem ersten Endgerät gesendeten Nachricht der Ungültigkeitsmachung der gemeinsamen Nutzung des drahtlosen lokalen Netzwerks, und Senden der Nachricht der Ungültigkeitsmachung der gemeinsamen Nutzung des drahtlosen lokalen Netzwerks zu dem Prozessor.

## Revendications

1. Procédé de partage d'un réseau local sans fil, comprenant les étapes consistant à :
recevoir, par une plateforme de partage de réseau local sans fil, un message de partage de réseau local sans fil envoyé par un premier terminal, le message de partage de réseau local sans fil transportant une information de partage de réseau local sans fil, l'information de partage de réseau local sans fil incluant au moins un SSID de réseau local sans fil et un mot de passe de réseau local sans fil, et le premier terminal ayant déjà accédé au réseau local sans fil ;
générer, par la plateforme de partage de réseau local sans fil, une page de partage de réseau local sans fil selon l'information de partage de réseau local sans fil transportée dans le message de partage de réseau local sans fil, la page de partage de réseau local sans fil comprenant l'information de partage de réseau local sans fil ;
générer, par la plateforme de partage de réseau local sans fil, une information d'identification correspondant à la page de partage de réseau local sans fil, l'information d'identification étant utilisée pour identifier exclusivement la page de partage de réseau local sans fil, et l'information d'identification correspondant à la page de partage de réseau local sans fil étant fournie par des ondes sonores ; et
notifier, par la plateforme de partage de réseau local sans fil, l'information d'identification correspondant à la page de partage de réseau local sans fil au premier terminal pour un second terminal qui demande de partager le réseau local sans fil afin d'obtenir l'information d'identification auprès du premier terminal, de sorte que le second terminal accède à la page de partage de réseau local sans fil selon l'information d'identification lue au niveau du premier terminal et accède au réseau local sans fil selon l'information de partage de réseau local sans fil comprise dans la page de partage de réseau local sans fil,
le procédé comprenant les étapes consistant à enregistrer, par le premier terminal, l'information par ondes sonores correspondant à la page de partage de réseau local sans fil et à lire, par le second terminal, l'information d'identification correspondant à la page de partage de réseau local sans fil de manière à identifier l'information par ondes sonores lue au niveau du premier terminal, s'il demande de partager le réseau local sans fil.

2. Procédé selon la revendication 1, dans lequel la génération de l'information d'identification correspondant à la page de partage de réseau local sans fil comprend spécifiquement les étapes consistant à :
obtenir un localisateur uniforme de ressources correspondant à la page de partage de réseau local sans fil ; et
utiliser une information codée, obtenue en codant le localisateur uniforme de ressources, en guise d'information d'identification correspondant à la page de partage de réseau local sans fil.

3. Procédé selon la revendication 1 ou 2, dans lequel l'information de partage de réseau local sans fil comprend un identifiant d'ensemble de services de réseau local sans fil ainsi qu'un nom d'utilisateur et un mot de passe pour accéder au réseau local sans fil.

4. Procédé selon la revendication 3, l'information de partage de réseau local sans fil comprenant une information de validité de partage de réseau local sans fil ; et
le procédé comprenant en outre, après la génération de la page de partage de réseau local sans fil, l'étape consistant à :
à la réception d'un message de définition de non-validité de partage de réseau local sans fil envoyé par le premier terminal, définir l'information de validité de partage de réseau local sans fil, comprise dans la page de partage de réseau local sans fil, sur un partage non valide de réseau local sans fil.

5. Procédé selon la revendication 4, le procédé comprenant en outre, quand il est détecté que le second terminal accède à la page de partage de réseau local sans fil selon l'information d'identification, les étapes consistant à :
obtenir l'information de validité de partage de réseau local sans fil comprise dans la page de partage de réseau local sans fil ; et
quand il est déterminé que l'information de validité de partage de réseau local sans fil obtenue est un partage valide de réseau local sans fil, renvoyer la page de partage de réseau local sans fil au second terminal.

6. Système incluant une plateforme de partage de réseau local sans fil, un premier terminal et un second terminal, la plateforme de partage de réseau local sans fil comprenant :
un émetteur-récepteur configuré pour recevoir un message de partage de réseau local sans fil envoyé par un premier terminal et pour envoyer le message de partage de réseau local sans fil à un processeur, le premier terminal ayant déjà accédé au réseau local sans fil ; et
le processeur, configuré pour recevoir le message de partage de réseau local sans fil envoyé par l'émetteur-récepteur et pour générer une page de partage de réseau local sans fil selon une information de partage de réseau local sans fil transportée dans le message de partage de réseau local sans fil, l'information de partage de réseau local sans fil incluant au moins un SSID de réseau local sans fil et un mot de passe de réseau local sans fil, la page de partage de réseau local sans fil comprenant l'information de partage de réseau local sans fil ;
le processeur étant en outre configuré pour générer une information d'identification correspondant à la page de partage de réseau local sans fil et pour envoyer l'information d'identification correspondant à la page de partage de réseau local sans fil à l'émetteur-récepteur, l'information d'identification étant utilisée pour identifier exclusivement la page de partage de réseau local sans fil, et l'information d'identification correspondant à la page de partage de réseau local sans fil étant fournie par des ondes sonores ; et
l'émetteur-récepteur étant en outre configuré pour notifier, au premier terminal pour un second terminal qui demande de partager un réseau local sans fil, l'information d'identification qui correspond à la page de partage de réseau local sans fil et qui est envoyée par le processeur pour obtenir l'information d'identification auprès du premier terminal, de sorte que le second terminal accède à la page de partage de réseau local sans fil selon l'information d'identification lue au niveau du premier terminal et accède au réseau local sans fil selon l'information de partage de réseau local sans fil comprise dans la page de partage de réseau local sans fil,
le premier terminal enregistrant l'information par ondes sonores correspondant à la page de partage de réseau local sans fil, et
le second terminal lisant l'information d'identification correspondant à la page de partage de réseau local sans fil de manière à identifier l'information par ondes sonores lue au niveau du premier terminal, s'il demande de partager le réseau local sans fil.

7. Système selon la revendication 6, dans lequel le processeur est configuré pour :
obtenir un localisateur uniforme de ressources correspondant à la page de partage de réseau local sans fil et utiliser une information codée, obtenue en codant le localisateur uniforme de ressources, en guise d'information d'identification correspondant à la page de partage de réseau local sans fil.

8. Système selon la revendication 6 ou 7, dans lequel le processeur est configuré pour :
générer la page de partage de réseau local sans fil selon un identifiant d'ensemble de services de réseau local sans fil ainsi qu'un nom d'utilisateur et un mot de passe pour accéder au réseau local sans fil, l'identifiant d'ensemble de services de réseau local sans fil ainsi que le nom d'utilisateur et le mot de passe pour accéder au réseau local sans fil étant compris dans l'information de partage de réseau local sans fil.

9. Système selon la revendication 8, dans lequel le processeur est en outre configuré pour :
générer la page de partage de réseau local sans fil selon une information de validité de partage de réseau local sans fil comprise dans l'information de partage de réseau local sans fil.

10. Système selon la revendication 9, dans lequel l'émetteur-récepteur est en outre configuré pour :
recevoir un message de définition de non-validité de partage de réseau local sans fil envoyé par le premier terminal et envoyer le message de définition de non-validité de partage de réseau local sans fil au processeur.
